# FASCICULE DE BREVET EUROPEEN

(11) **EP 1 675 791 B1**
(45) Date de publication et mention de la délivrance du brevet: **06.07.2011**
(21) Numéro de dépôt: 04817275.3
(22) Date de dépôt: 21.10.2004
(51) Int. Cl.: B65G 9/00, B61B 12/10, B60T 7/12, B65G 63/00

(54) **SYSTEME DE TRANSPORT PAR GRAVITE DE VEHICULES SUR RAIL**
SCHWERKRAFTBEFÖRDERUNGSSYSTEM FÜR SCHIENENFAHRZEUGE
GRAVITY TRANSPORT SYSTEM FOR RAIL VEHICLES

(30) Priorité: 23.10.2003 BE 200300566
(43) Date de publication de la demande: 05.07.2006
(73) Titulaire: ADAM, Gérard, 6792 Halanzy (BE)
(72) Inventeur: ADAM, Gérard, 6792 Halanzy (BE)
(74) Mandataire: Claeys, Pierre
(86) Numéro de dépôt international: PCT/EP2004/052602
(87) Numéro de publication internationale: WO 2005/040015

(56) Documents cités:
- FR-A- 1 602 034
- FR-A- 2 235 068
- GB-A- 161 998
- US-A- 2 593 699

## Description

La présente invention est relative à un système de transport, comprenant
- une voie de transport formée d'au moins un rail de roulement,
- des véhicules à transporter, et
- un dispositif de roulement relié à chaque véhicule et agencé sur ledit au moins un rail de roulement de manière à pouvoir rouler sur celui-ci, chaque véhicule pourvu du dispositif de roulement présentant une résistance au roulement sur ledit au moins un rail,
- ladite voie de transport présentant un point de départ et un point d'arrivée ayant une altitude égale ou plus élevée que le point de départ et comprenant plusieurs tronçons de voie descendants qui ont une pente suffisante pour que ladite résistance au roulement de chaque véhicule soit surmontée, chaque véhicule roulant sur chaque tronçon descendant par simple gravité, et entre lesquels est chaque fois agencé un tronçon de voie ascendant sur lequel chaque véhicule est entraîné par un dispositif d'entraînement.

On connaît des systèmes de transport sur rail depuis longtemps déjà, sous la forme de lignes de chemin de fer. Sur les lignes de chemin de fer, la résistance au roulement de véhicules sur roues est très favorable en comparaison de celle des véhicules à moteur roulant sur route. Toutefois le tracé suivi par ces lignes de chemin de fer implique un entraînement constant des wagons en circulation par une motrice , soit pour les tracter en cas de pentes ascendantes, soit pour les freiner en cas de pentes descendantes. Il en résulte une grande consommation d'énergie pour la traction et une grande dissipation d'énergie pour le freinage. La motrice elle-même est d'un poids important qu'il faut déplacer et freiner avec le reste du convoi.

On connaît aussi des systèmes de transport du type des dispositifs prévus dans des foires ou dans des parcs d'attractions, appelés les "montagnes russes". Les pentes de ces dispositifs sont utilisées pour obtenir en descente des accélérations très violentes, destinées à provoquer la frayeur des passagers des véhicules qui circulent. Une grande part de l'énergie accumulée en descente est utilisée aussitôt pour gravir une "montagne" suivante la plus élevée possible, sans devoir faire usage d'un moyen moteur. Par conséquent, les distances parcourues sur une telle installation sont relativement courtes.

On connaît aussi des systèmes de transport, tels qu'indiqués au début (voir par exemple FR-1602034 et FR-2235068). Ces systèmes sont prévus uniquement pour la descente par gravité de véhicules sur une voie de transport et des dispositifs spécifiques de freinage sont prévus pour ralentir la vitesse des véhicules en train d'effectuer leur descente, ce qui occasionne une dissipation d'énergie vers l'extérieur.

Dans le US-2593699 on décrit un tel système de transport, à mettre en oeuvre dans un local d'entreprise et agencé selon une boucle sans fin. Lorsque la voie de transport atteint un niveau trop bas par rapport au sol du local, elle présente des tronçons de voie ascendants sur lesquels les véhicules sont entraînés vers le haut pendant une courte distance.

Aucun des éléments de l'état antérieur de la technique ne se préoccupe d'un transport sur longue distance sur des parcours à reliefs variables entre le point de départ et le point d'arrivée. Beaucoup des documents antérieurs ont prévu une descente de véhicules par gravité le long d'une voie de transport, sans envisager de trajet où la différence d'altitude entre le point de départ et le point d'arrivée est nulle ou négative.

La présente invention a pour but de mettre au point un système de transport de véhicules qui permette d'organiser une utilisation la plus parcimonieuse possible d'énergies potentielles, et en particulier de la gravité, et une utilisation maximale des reliefs naturels. Ce système devrait avantageusement permettre le transport, non fluvial, de véhicules spécifiques ou de conteneurs, aux dimensions normalisées ou non, à vitesse et trafic contrôlés, et cela de préférence sur longue distance, par exemple sur plusieurs kilomètres.

On a résolu ce problème suivant l'invention par un système de transport suivant la revendication 1.

Etant donné que la pente des tronçons descendants est calculée pour ne pas permettre une accélération continue des véhicules sur toute leur longueur, la vitesse de chaque véhicule va être équilibrée par la résistance au roulement additionnée d'autres résistances, telles que la résistance à l'air du véhicule, et ainsi devenir sensiblement constante.

La voie de transport suivant l'invention présente un point de départ et un point d'arrivée qui sont différents et la voie de transport ne forme donc pas une boucle entre deux points identiques.

En cas de terrain plat, on peut par exemple envisager, avant le premier tronçon de voie descendant, un tronçon de voie ascendant, qui permet d'initier le mouvement de descente sur le premier tronçon de voie descendant.

Lorsque le point de départ a une altitude égale ou plus basse que le point d'arrivée, il suffit de calculer le tracé de la voie en fonction du relief, de manière qu'il y ait le moins de tronçons ascendants possibles. Il faut toutefois qu' aucun véhicule ne soit en un point, soulevé plus haut que l'altitude qu'aurait le véhicule en ce point sur une voie présentant un tronçon descendant unique entre le point de départ et le point d'arrivée et pourvu de la pente requise suivant l'invention.

L'élaboration de tels tracés permet d'éviter au maximum possible les accidents de terrain et donc les descentes et montées abruptes successives, energivores, d'un point à un autre lorsqu'on emprunte une ligne directe.

Les véhicules suivant l'invention sont déplacés sur les tronçons descendants avec uniquement une dissipation d'énergie extrêmement minime due au frottement du dispositif de roulement sur le ou les rails, car il n'y a pas de nécessité de freinage.

De manière avantageuse, la pente susdite est supérieure à 3/1000, de préférence d'au moins 4/1000, pour surmonter la résistance au roulement d'un véhicule à roues métalliques roulant sur un ou des rails d'acier.

A une pente de 4/1000, la vitesse du véhicule va, après une légère accélération de très courte durée, acquérir une vitesse sensiblement constante, par exemple de l'ordre de 30 à 50 km/h, de préférence de l'ordre de 40 km/h.

La pente des tronçons de voie descendants est donc de préférence continue. De cette manière , les véhicules circulant dessus à vitesse constante restent pendant leur déplacement par gravité à une distance sensiblement permanente l'un de l'autre. De préférence la circulation sur les tronçons ascendants se fait à cette même vitesse constante.

Grâce à cette pente extrêmement faible aux limites inférieure et supérieure très proches, le véhicule peut parcourir entre le point de départ du tronçon de voie descendant et son point d'arrivée une distance maximale, sans dépense d'énergie non renouvelable.

Suivant l'invention, le véhicule pourvu du dispositif de roulement est entraîné par un dispositif d'entraînement qui peut être porté par le véhicule ou le dispositif de roulement lui-même et se mettre en marche dès détection d'une pente ascendante, puis s'arrêter dès détection d'une pente descendante. Le dispositif d'entraînement peut aussi avantageusement être porté par le ou les rails sur le tronçon ascendant et coopérer avec tout véhicule ou dispositif de roulement accédant à ce tronçon ascendant, tout en restant à l'arrêt dès qu'aucun véhicule n'est détecté sur ce tronçon. On peut aussi prévoir n'importe quel dispositif d'entraînement approprié monté à proximité des tronçons ascendants en tout endroit quelconque permettant une coopération avec le conteneur dès l'approche de celui-ci.

Suivant une forme de réalisation avantageuse de l'invention, la voie de transport comprend, au moins sur certains tronçons, des moyens de support de rail aérien et le véhicule est suspendu à ce rail aérien par le dispositif de roulement. Ce type de moyen de support est très léger en infrastructure et il s'adapte très aisément à des variations de relief du terrain.

Avantageusement, le véhicule à transporter est un conteneur, de préférence un conteneur à dimensions hors tout standards. Ce conteneur peut aussi être pourvu d'éléments de coin standards, du type selon les normes ISO qui permettent d'exercer sur le conteneur des forces extérieures de traction et de compression. Le dispositif de roulement peut être fixé sur le conteneur sous une forme repliable dans le volume formé par les dimensions hors tout du conteneur. De cette façon, il n'encombre pas pendant l'empilement ou les manutentions des conteneurs. Le dispositif de roulement peut aussi être indépendant du conteneur et être fixé sur celui-ci au départ de la voie, soit, par exemple par l'intermédiaire d'un cadre de fixation connu en soi qui est capable d'être accroché aux éléments de coin susdits, soit directement, sans cadre intermédiaire, aux éléments de coin.

Ce véhicule peut aussi être hors de toute norme standard et adapté aux besoins propres d'une société.

Ce véhicule peut également être une remorque de camion, un camion complet, un mobil home ou nouveau véhicule destiné au tourisme par ce mode de transport.

Suivant l'invention, le système de transport transporte plusieurs véhicules sur la voie de transport et il comprend des moyens d'équilibrage de la vitesse de deux véhicules successifs, ayant pour effet un maintien de distance entre les véhicules.

D'autres formes de réalisation du système de transport suivant l'invention sont indiquées dans les revendications annexées.

L'invention concerne également une utilisation d'un système de transport tel qu'indiqué précédemment, pour transporter des véhicules sur longues distance en faisant usage d'une manière parcimonieuse des énergies potentielles, cette utilisation comprenant un relevé du relief entre le point de départ et le point d'arrivée et une détermination du tracé de la voie de transport sur base de ce relevé, de façon que celle-ci présente ladite pente sur lesdits tronçons descendants et un nombre minimum de tronçons ascendants.

D'autres détails et particularités de l'invention ressortiront de la description d'exemples de réalisation de l'invention donnés ci-après, à titre non limitatif, et avec référence aux dessins.
Les figures 1 et 2 représentent de manière schématique deux voies suivant l'invention.
Les figures 3 et 4 représentent une vue latérale et une vue frontale d'un conteneur suspendu dans ce système de transport suivant l'invention.
La figure 5 représente, dans une vue partielle en plan, le dispositif de roulement d'un conteneur applicable dans un système de transport suivant l'invention.
La figure 6 représente une vue en coupe partielle suivant la ligne VI-VI de la figure 3.
La figure 7 représente une vue du dessus détaillée d'un dispositif de pinçage de câble utilisable dans un système suivant l'invention.

Sur les différents dessins les éléments identiques ou analogues sont désignés par les même références. Il faut noter que les figures ne sont pas à l'échelle.

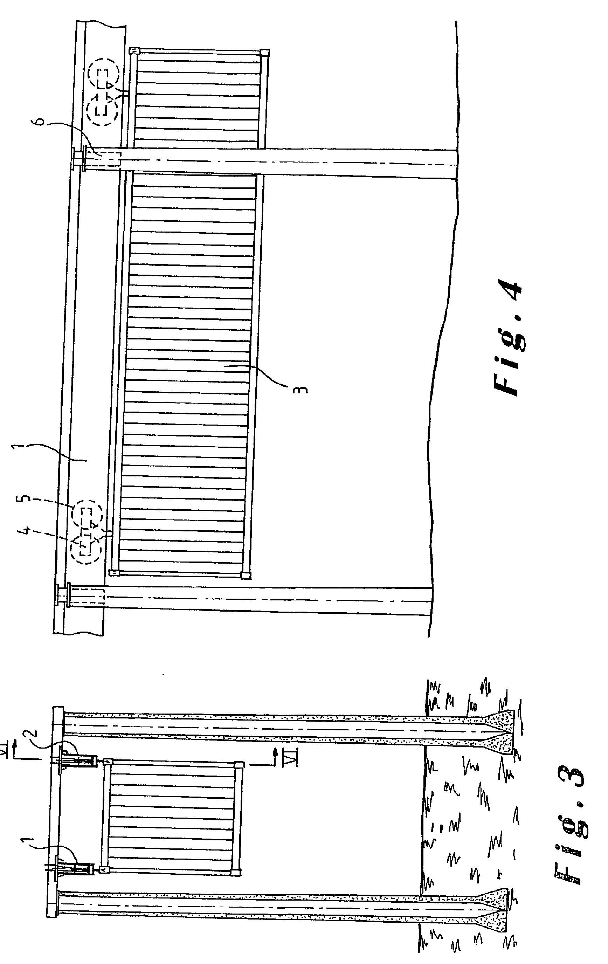

Ainsi qu'on peut le voir en particulier sur les figures 3 à 5, l'exemple illustré de réalisation de système de transport suivant l'invention comprend une voie de transport formée, dans ce cas, de deux rails de roulement 1 et 2, un véhicule à transporter sous la forme d'un conteneur 3 et un dispositif de roulement comportant quatre bogies 4 supportant chacun quatre roues 5. Les rails de roulement sont, dans l'exemple illustré, disposés de façon à former une voie aérienne et, pour cela, ils sont supportés par des portiques 6 disposés à intervalles réguliers.

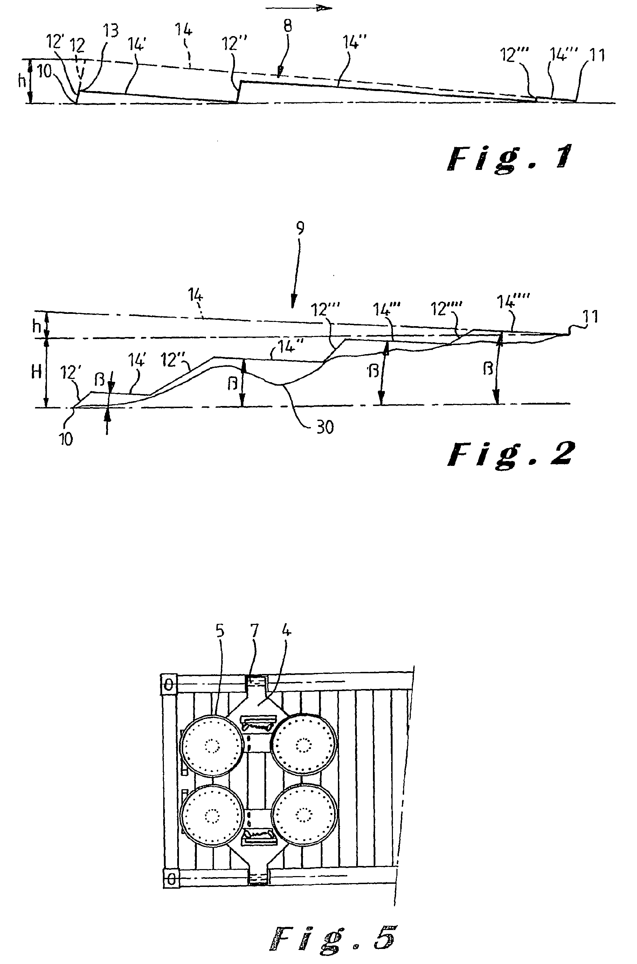

Les bogies du dispositif de roulement, dans l'exemple de réalisation illustré sur la figure 5, sont reliés par une charnière 7 au châssis du conteneur 3 et ils sont repliés sur le plafond du conteneur 3 par pivotement, de manière à être escamotés dans le volume hors tout du conteneur.

Sur les figures 1 et 2 on a représenté deux voies de transport différentes 8 et 9. Sur la figure 1, la voie de transport est appliquée sur un terrain plat et sur la figure 2 sur un terrain ascendant, et elle présente chaque fois un point de départ 10 et un point d'arrivée 11.

La voie de transport 8 comporte, au départ, un tronçon de voie ascendant 12' éventuellement, mais pas nécessairement, court. Au sommet 13 de ce tronçon 12', la voie emprunte un tronçon de voie descendant 14'. Le tronçon de voie descendant doit être étudié en fonction du terrain pour ne pas atteindre une pente trop forte, provoquant une accélération continue des véhicules roulant sur la voie. Dans cet exemple de réalisation, la pente est prévue de 4/1000. En supposant donc que le terrain soit à l'altitude 0, et que l'altitude du sommet 13 soit de 4m, un véhicule descendant sur le tronçon 14' peut parcourir librement à vitesse constante une distance de 1000m. Evidemment, le point de départ peut souvent se situer à une altitude plus élevée que 4 m. Par exemple les conteneurs empilés sur un navire peuvent au départ présenter une altitude de 30 m et davantage. Plutôt que de les débarquer sur le quai, puis de les empiler là à nouveau pour les stocker, on pourrait donc dès l'abord profiter de cette hauteur initiale pour permettre d'effectuer déjà un premier parcours important aux conteneurs débarqués. A une altitude de 20 m au départ, le conteneur peut atteindre une distance de 5 km.

Sur la figure 1, on a aussi illustré comment poursuivre sur longue distance un parcours en terrain plat à partir d'un point de départ 10. On dispose en succession des tronçons ascendants 12', 12" et 12'" et des tronçons descendants à pente douce 14', 14" et 14"'. La dépense d'énergie à effectuer pour qu'un véhicule roule entre un point de départ et un point d'arrivée sur une voie de transport dont les tronçons descendants présentent une pente de 4/1000 est en théorie la même si la voie comprend un seul tronçon ascendant 12 et un seul tronçon descendant 14 ou plusieurs tronçons ascendants et descendants intercalés. Pour des raisons de dépenses en infrastructure il est évidemment plus économique de diviser la voie de transport, comme illustré sur la figure 2, en petits tronçons successifs de façon à pouvoir profiter au mieux des variations de relief du terrain. Le tracé le plus approprié peut être calculé de manière connue à partir des données de relief existant à l'heure actuelle.

Ainsi qu'il ressort de la figure 2, lorsque la voie comprend plusieurs tronçons ascendants et descendants successifs, un véhicule sur cette voie ne doit pas dépasser en hauteur le trajet que suivrait ce véhicule si la voie ne comprenait qu'un seul tronçon descendant 14 présentant la pente énergétique minimum (comme illustré en traits interrompus sur la figure 2).

Si un véhicule se trouve plus haut que ce trajet, il devra descendre suivant une plus grande pente pour arriver en 11, et il devra donc freiner pour maintenir sa vitesse constante. Dès qu'en un endroit de la voie, le véhicule atteint ce trajet de tronçon descendant unique, il est préférable qu'il continue à suivre ce trajet jusqu'au point d'arrivée. S'il redescend en dessous, il effectue tout d'abord un parcours à pente plus raide où un freinage va s'avérer nécessaire et il va devoir ou bien effectuer le reste du parcours à une pente plus douce que la pente déterminée suivant l'invention, avec le risque de s'arrêter en cours de route, la force de gravité s'avérant insuffisante pour équilibrer la résistance au roulement cumulée aux autres résistances précitées, ou bien passer par un nouveau tronçon de voie ascendant qui aurait pu être évité.

La pente vers le bas des tronçons descendants doit donc être suffisante pour vaincre la résistance au roulement des roues 5 sur les rails 1 et 2. En fonction de cette résistance qui est calculable aisément par un homme de métier, et qui varie notamment en fonction des matériaux utilisés pour les rails et pour les roues, la pente sera déterminée pour que le véhicule soit nécessairement entraîné sur les rails par gravité, et donc ne soit pas arrêté par les forces de frottement. Par ailleurs cette pente ne doit pas être trop forte et provoquer une accélération continue du véhicule sur le tronçon descendant. Au contraire, la pente doit être aussi douce que possible, de façon à atteindre un équilibre entre l'accélération du véhicule et les résistances qui lui sont opposées, en particulier la résistance au roulement et la résistance à l'air. Pour des roues métalliques sur des rails métalliques on peut estimer qu'une pente d'au moins 3/1000, de préférence de l'ordre de 4/1000, est appropriée. Cette pente est, de préférence, constante et permet donc un déplacement à vitesse constante des conteneurs, de préférence de l'ordre de 30 à 50 km/h, avantageusement de l'ordre de 40 km/h, sur un trajet le plus long possible.

Sur la figure 2, on a illustré un exemple de réalisation de voie de transport où le point de départ 10 est situé à une altitude inférieure au point d'arrivée 11. Comme dans le cas précédent on prévoit une succession de tronçons ascendants 12', 12", 12"' et de tronçons descendant 14', 14", et 14"'. Tous les tronçons descendants sont prévus avec la pente énergétique minimum formant un angle β par rapport à l'horizontale. Les tronçons ascendants présentent un angle de montée différent selon le relief existant qui est illustré par la courbe 30.

Dans le cas illustré sur la figure 2, le tracé, que suivrait le véhicule si la voie de transport présentait un tronçon descendant unique 14, démarre au point de départ 10, à une hauteur correspondant à la somme de la hauteur H entre le point d'arrivée 11 et le point de départ 10 et la hauteur h de dénivellation minimum pour que le tracé forme un angle β avec l'horizontale sur toute la longueur de la voie. Suivant l'invention le véhicule ne peut dépasser en hauteur ce tracé formé par le tronçon unique 14.

Comme on peut le voir, le relief 30 peut présenter en ligne directe des élévations et des dépressions parfois importantes. En cas de telles dénivellations, pour pouvoir suivre la pente énergétique minimum, sans devoir nécessiter de travaux d'infrastructure au prix exorbitant comme des ponts ou des tunnels, le tracé suivra un parcours sinueux non représenté en fonction du relief, ce qui permettra d'éviter ces écarts d'altitude.

L'application d'une vitesse constante douce aux conteneurs passant sur une voie de transport offre l'avantage que les conteneurs restent équidistants, du moins si leur charge utile n'est pas trop variable.

Il est évident que, dans certaines circonstances, certaines variables sont à prendre en compte, comme le vent qui peut changer de direction ou la charge utile des conteneurs ou encore leur tare respective.

Il est donc prévu des moyens d'équilibrage de la vitesse des conteneurs successifs, qui vont de ce fait exercer un maintien de distance entre véhicules.

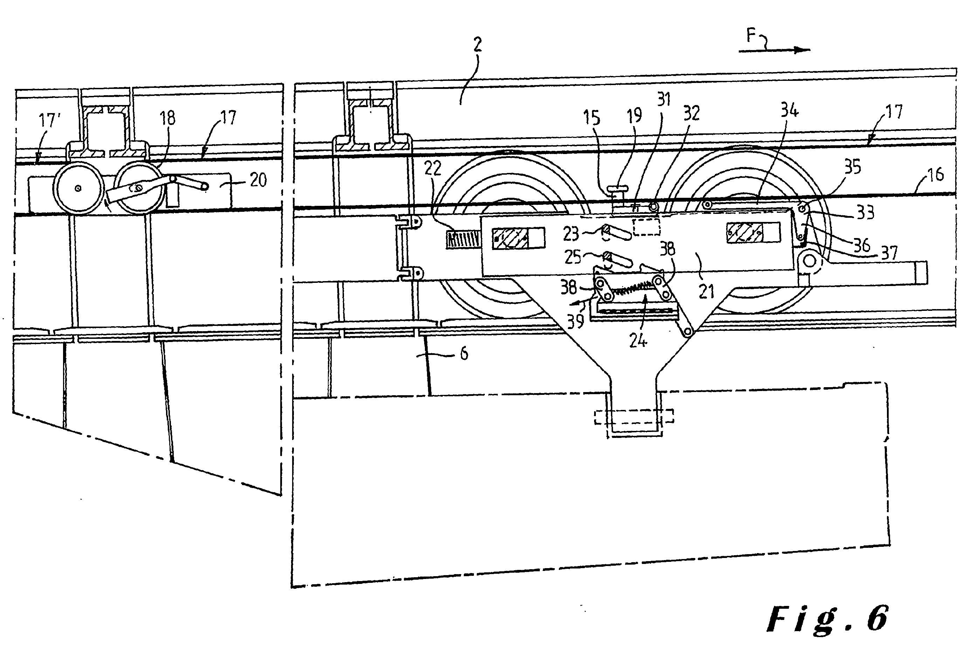

Ainsi qu'il ressort en particulier de la Fig. 6, les conteneurs, roulant librement dans le sens de la flèche F, sont munis de pinces puissantes 15, qui ont une capacité de serrage de, par exemple, 5000 N, avec un coefficient de frottement de 0,4 et qui sont fixées sur des glissières 21 des bogies. Ces pinces sont disposées de part et d'autre du brin 16 d'un câble 17 qui est prévu le long de la voie de transport parallèlement à elle. Ce câble sans fin est renvoyé par deux poulies de renvoi 18, et il s'étend sur une longueur prédéterminée, supérieure à la distance qu'ils doivent respecter entre eux, cette longueur étant par exemple de 25 m. Avantageusement, des pinces et des câbles correspondants sont disposés des deux côtés du conteneur. D'un côté de la voie de transport, un câble sans fin 17 succède à un autre 17' en continu sur toute la voie de transport. Il en est de même de l'autre côté, mais de manière décalée, afin que des pinces coopèrent constamment avec au moins un câble sur toute la longueur de la voie de transport. Les pinces à l'état serré peuvent exercer avantageusement une traction sur le câble de l'ordre de 2000 N et donc, lors du passage d'un conteneur, le câble 17 et le câble disposé de l'autre côté du conteneur sont entraînés de façon à tourner autour des poulies 18.

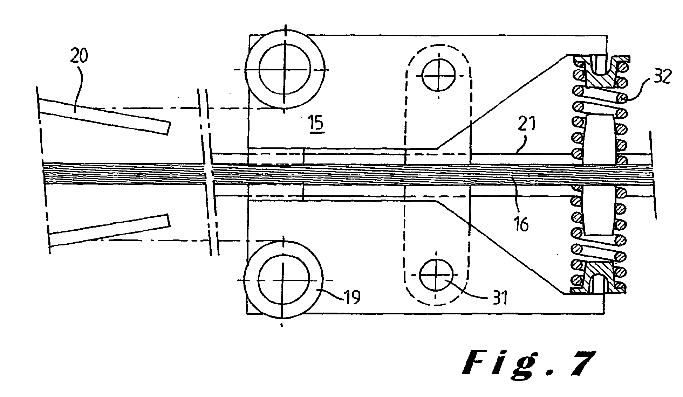

Les mâchoires des pinces sont, dans l'exemple illustré (v. en particulier figures 6 et 7), équipées de petites roues 19 montées sur roulement et destinées à ouvrir les pinces lorsqu'elles arrivent en contact avec un écarteur 20. Lors de ce contact, les roues 19 écartent les pinces par pivotement autour d'axes 31 et lâchent le câble, ce qui permet ainsi un passage au niveau des poulies 18, les roues 19 et les pinces 15 étant rappelées élastiquement en place par un ressort 32 dès que les roues 19 cessent d'être en contact avec l'écarteur 20.

Si la vitesse d'un conteneur est telle qu'il a tendance à se rapprocher du conteneur précédent parce que sa vitesse est légèrement supérieure à la vitesse constante prédéterminée, il s'en approchera jusqu'à une distance de 25 m, puis au moins une de ses pinces 15 commencera à pincer le même câble 17 que le conteneur précédent. Cela va entraîner un rééquilibrage entre la vitesse des deux conteneurs, et donc un freinage de l'un et une accélération de l'autre. Ce freinage va s'exprimer par une tendance à coulisser vers l'arrière, en sens opposé à F, de la glissière 21. Dès que cette force de coulissement dépasse la force du ressort de rappel 22, le coulissement vers l'arrière devient effectif et les axes 23 des patins de freinage 24 peuvent descendre dans les ouvertures oblongues verticales 25, le conteneur étant alors freiné par frottement des patins sur les rails. Dès que la vitesse des deux conteneurs s'est équilibrée le ressort de rappel ramène la glissière 21 dans sa position haute initiale et le freinage cesse.

De même par le pinçage simultané du même câble 17 par les deux conteneurs qui se suivent, le premier conteneur, plus lent, est entraîné à accélérer car les deux conteneurs et le câble ne forment plus qu'un seul ensemble, obligé de se déplacer à la même vitesse.

Dans l'exemple illustré sur la figure 6, les bogies du conteneur sont aussi avantageusement dotés d'un dispositif d'immobilisation qui détecte, par l'intermédiaire des câbles 17, 17', le bon ou le mauvais fonctionnement du système suivant l'invention. En cas de rupture de voie par exemple le câble 17 rompu se détend et libère un levier 33 dont le bras 34 est, en fonctionnement normal , maintenu dans la position illustrée sur la figure 6 par la tension des câbles successifs. Le bras de levier 34 ainsi libéré est relevé sous la tension d'un ressort de rappel 37 puis par l'entraînement des roues et il pivote vers le haut autour de l'axe 35 tandis que l'autre bras de levier 36 repousse la glissière 21 vers la gauche sur la figure 6. Le patin 24 est alors, comme expliqué précédemment, descendu sur le rail, son adhérence provoquera le redressement des leviers 38 suivants la flèche 39 jusqu'à la verticale, en provoquant un soulèvement des roues par rapport au rail et donc une immobilisation totale du conteneur.

Le conteneur immobilisé arrête la circulation du câble situé du côté du conteneur qui est opposé à celui qui a été rompu, ce qui provoque l'immobilisation de tout conteneur déjà relié à ce câble par des pinces ou venant pincer ce câble. Dès lors l'arrêt se transmet aussitôt par cette transmission à tous les conteneurs de la voie.

Il doit être entendu que la présente invention n'est en aucune façon limitée aux formes de réalisation décrites ci-dessus, et que bien des modifications peuvent y être apportées sans sortir du cadre des revendications annexées.

On peut par exemple envisager d'appliquer le système de transport suivant l'invention à des répliques sous forme de modèles réduits et de jouets.

## Revendications

1. Système de transport, comprenant :
- une voie de transport (9) formée d'au moins un rail de roulement (1, 2),
- des véhicules à transporter (3), et
- un dispositif de roulement relié à chaque véhicule et agencé sur ledit au moins un rail de roulement de manière à pouvoir rouler sur celui-ci, chaque véhicule (3) pourvu du dispositif de roulement présentant une résistance au roulement sur ledit au moins un rail (1, 2),
- ladite voie de transport (8,9) présentant un point de départ (10) et un point d'arrivée (11) ayant une altitude égale ou plus élevée que le point de départ et comprenant plusieurs tronçons de voie descendants (14',14",14"') qui ont une pente suffisante pour que ladite résistance au roulement de chaque véhicule soit surmontée, chaque véhicule roulant sur chaque tronçon descendant par simple gravité, et entre lesquels est chaque fois agencé un tronçon de voie ascendant (12',12",12"') sur lequel chaque véhicule est entraîné par un dispositif d'entraînement,
**caractérisé en ce que** la pente de chaque tronçon de voie descendant est insuffisante pour produire une accélération continue des véhicules (3) sur ledit au moins un rail de roulement (1,2), chaque véhicule présentant là une vitesse sensiblement constante, équilibrée par ladite résistance au roulement additionnée d'autres résistances, telles que la résistance à l'air du véhicule,
**en ce que** le système comprend des moyens d'équilibrage de vitesse de deux véhicules successifs, ayant pour effet un maintien de distance entre les véhicules, et comprenant au moins un câble sans fin renvoyé librement en boucle par des poulies les long de la voie de transport et des pinces agencées sur chaque véhicule pour pincer le câble et entraîner celui-ci pendant son transport, et
**en ce que** la voie de transport (a) présente un tracé selon lequel aucun véhicule en un point n'est soulevé plus haut que l'altitude qu'aurait le véhicule en ce point sur une voie de transport présentant un tronçon descendant unique (14) pourvu de la pente susdite entre le point de départ et le point d'arrivée.

2. Système de transport suivant la revendication 1, **caractérisé en ce que** la pente susdite est d'au moins 3/1000, de préférence d'au moins 4/1000.

3. Système de transport suivant l'une ou l'autre des revendications 1 et 2, **caractérisé en ce que** la pente susdite est constante sur chaque tronçon descendant.

4. Système de transport suivant l'une quelconque des revendications 1 à 3, **caractérisé en ce que** la vitesse de chaque véhicule sur les tronçons descendants est constante, de l'ordre de 30 à 50 km/h, de préférence de l'ordre de 40 km/h.

5. Système de transport suivant la revendication 4 , **caractérisé en ce que** les dispositifs d'entraînement entraînent chaque véhicule sur les tronçons de voie ascendants à une vitesse égale à la vitesse constante susdite.

6. Système de transport suivant l'une quelconque des revendications 1 à 5, **caractérisé en ce que** la voie de transport comprend, au moins sur certains tronçons, des moyens de support (6) de rail aérien (1, 2) et **en ce que** chaque véhicule est suspendu à ce rail aérien par le dispositif de roulement.

7. Système de transport suivant l'une quelconque des revendications 1 à 6, **caractérisé en ce que** au moins un véhicule est un conteneur (3) à transporter qui présente un volume à dimensions hors tout standards, et **en ce que** le dispositif de roulement est fixé sur le conteneur de manière repliable dans le volume susdit, en position de repos du conteneur.

8. Système de transport suivant l'une quelconque des revendications 1 à 6, **caractérisé en ce qu'**au moins un véhicule est un conteneur, et **en ce que** son dispositif de roulement est indépendant du véhicule et à fixer sur celui-ci au point de départ.

9. Utilisation d'un système de transport suivant l'une quelconque des revendications 1 à 8, pour transporter des véhicules sur longues distances en faisant usage d'une manière parcimonieuse des énergies potentielles, comprenant un relevé du relief entre le point de départ et le point d'arrivée et une détermination du tracé de la voie de transport sur base de ce relevé, de façon que celle-ci présente la dite pente sur lesdits tronçons descendants et un nombre minimum de tronçons ascendants.

## Claims

1. Transport system, comprising:
- a transport track (9) formed by at least one running rail (1, 2),
- vehicles to be transported (3), and
- a running device connected to each vehicle and arranged on the said at least one running rail so as to be able to run on it, each vehicle (3) provided with the running device having resistance to running on the said at least one rail (1, 2),
- the said transport track (8, 9) having a departure point (10) and an arrival point (11) having an altitude equal to or higher than the departure point and comprising several descending sections of track (14', 14", 14"') that have a sufficient slope for the said resistance to running of each vehicle to be overcome, each vehicle running on each descending section by simple gravity, and between which in each case an ascending section of track (12', 12", 12"') is arranged, on which each vehicle is driven by a driving device,
**characterised in that** the slope of each descending track section is insufficient to produce continuous acceleration of the vehicles (3) on the said at least one running rail (1, 2), each vehicle there having a substantially constant speed, balanced by the said resistance to running with other resistances added, such as the resistance of the vehicle to air,
**in that** the system comprises means of balancing the speed of two successive vehicles, having as its effect the maintenance of distance between the vehicles, and comprising at least one- endless cable returned freely in a loop by pulleys along the transport track and clamps arranged on each vehicle to grip the cable and drive it during its transport, and
**in that** the transport track (a) has route according to which no vehicle at one point is raised higher than the altitude that the vehicle would have at this point on a transport track having a single descending section (14) provided with the aforementioned slope between the departure point and the arrival point.

2. Transport system according to claim 1, **characterised in that** the aforementioned slope is at least 3/1000, preferably at least 4/1000.

3. Transport system according to one or other of claims 1 and 2, **characterised in that** the aforementioned slope is constant on each descending section.

4. Transport system according to any one of claims 1 to 3, **characterised in that** the speed of each vehicle on the descending sections is around 30 to 50 km/h, preferably around 40 km/h.

5. Transport system according to claim 4, **characterised in that** the driving devices drive each vehicle on the ascending track sections at a speed equal to the aforementioned constant speed.

6. Transport system according to any one of claims 1 to 5, **characterised in that** the transport track comprises, on at least some sections, means (6) of supporting an overhead rail (1, 2) and **in that** each vehicle is suspended from this overhead rail by the running device.

7. Transport system according to any one of claims 1 to 6, **characterised in that** at least one vehicle is a container (3) to be transported that has a volume with dimensions outside all standards, and **in that** the running device is fixed to the container in a manner that can be folded in the aforementioned volume, in the idle position of the container.

8. Transport system according to any one of claims 1 to 6, **characterised in that** at least one vehicle is a container, and **in that** its running device is independent of the vehicle and to be fixed to it at the departure point.

9. Use of a transport system according to any one of claims 1 to 8 for transporting vehicles over long distances while making use of the potential energies parsimoniously, comprising a recording of the relief between the departure point and the arrival point and a determination of the route of the transport track on the basis of this recording, so that it has the said slope on the said descending sections and a minimum number of ascending sections.

## Patentansprüche

1. Beförderungssystem, das Folgendes aufweist:
- ein Gleis (9), das aus mindestens einer Fahrschiene (1, 2) besteht,
- zu transportierende Fahrzeuge (3), und
- eine Fahrvorrichtung, die mit jedem Fahrzeug verbunden und auf der mindestens einen Fahrschiene derart eingerichtet ist, dass sie auf dieser fahren kann, wobei jedes Fahrzeug (3), das mit der Fahrvorrichtung versehen ist, einen Fahrwiderstand auf der mindestens einen Schiene (1, 2) aufweist,
- wobei das Gleis (8, 9) einen Ausgangspunkt (10) und einen Ankunftspunkt (11) aufweist, der eine gleiche oder höhere Höhenlage hat als der Ausgangspunkt und mehrere Abwärtsgleisabschnitte (14', 14", 14"') aufweist, die ein ausreichendes Gefälle haben, damit der Fahrwiderstand jedes Fahrzeugs überwunden wird, wobei jedes Fahrzeug auf jedem Abwärtsgleisabschnitt einfach schwerkraftbedingt fährt, und zwischen welchen jedes Mal ein Aufwärtsgleisabschnitt (12', 12", 12"') eingerichtet ist, auf dem jedes Fahrzeug von einer Antriebsvorrichtung angetrieben wird,
**dadurch gekennzeichnet, dass** das Gefälle jedes Abwärtsgleisabschnitts unzureichend ist, um eine kontinuierliche Beschleunigung der Fahrzeuge (3) auf der mindestens einen Fahrschiene (1, 2) zu erzeugen, wobei jedes Fahrzeug eine im Wesentlichen konstante Geschwindigkeit aufweist, die durch den Fahrwiderstand zuzüglich der anderen Widerstände, wie zum Beispiel der Luftwiderstand des Fahrzeugs, ausgeglichen wird,
dass das System Mittel zum Geschwindigkeitsausgieichen von zwei aufeinander folgenden Fahrzeugen aufweist, die ein Beibehalten der Entfernung zwischen den Fahrzeugen bewirken, und die mindestens ein Endloskabel aufweisen, das frei in einer Schleife von Scheiben entlang des Gleises umgelenkt wird, und Zangen, die auf jedem Fahrzeug eingerichtet sind, um das Kabel einzuklemmen und dieses während seines Transports anzutreiben, und
dass das Gleis (a) einen Verlauf aufweist, gemäß dem kein Fahrzeug an einer Stelle höher angehoben ist als die Höhenlage, die das Fahrzeug an dieser Stelle auf einem Gleis hätte, das einen einzigen Abwärtsgleisabschnitt (14) aufweist, der mit dem Gefälle zwischen dem Ausgangspunkt und dem Ankunftspunkt versehen ist.

2. Beförderungssystem nach Anspruch 1, **dadurch gekennzeichnet, dass** das Gefälle mindestens 3/1000, vorzugsweise mindestens 4/1000 beträgt.

3. Beförderungssystem nach Anspruch 1 oder 2, **dadurch gekennzeichnet, dass** das Gefälle auf jedem Abwärtsgleisabschnitt konstant ist.

4. Beförderungssystem nach einem der Ansprüche 1 bis 3, **dadurch gekennzeichnet, dass** die Geschwindigkeit jedes Fahrzeugs auf den Abwärtsgleisabschnitten in der Größenordnung von 30 bis 50 km/h, vorzugsweise in der Größenordnung von 40 km/h konstant ist.

5. Beförderungssystem nach Anspruch 4, **dadurch gekennzeichnet, dass** die Antriebsvorrichtungen jedes Fahrzeug auf den Aufwärtsgleisabschnitten mit einer Geschwindigkeit gleich der konstanten Geschwindigkeit antreiben.

6. Beförderungssystem nach einem der Ansprüche 1 bis 5, **dadurch gekennzeichnet, dass** das Gleis zumindest auf bestimmten Abschnitten Tragmittel (6) einer oberirdischen Schiene (1, 2) aufweist, und dass jedes Fahrzeug an dieser oberirdischen Schiene durch die Fahrvorrichtung angehängt ist.

7. Beförderungssystem nach einem der Ansprüche 1 bis 6, **dadurch gekennzeichnet, dass** mindestens ein Fahrzeug ein zu transportie-render Behälter (3) ist, der ein Volumen mit Standardbaumaßen aufweist, und dass die Fahrvorrichtung auf dem Behälter in Ruhestellung des Behälters in das Volumen rückfaltbar befestigt ist.

8. Beförderungssystem nach einem der Ansprüche 1 bis 6, **dadurch gekennzeichnet, dass** mindestens ein Fahrzeug ein Behälter ist, und dass seine Fahrvorrichtung von dem Fahrzeug unabhängig und auf diesem am Ausgangspunkt zu befestigen ist.

9. Einsatz eines Beförderungssystem nach einem der Ansprüche 1 bis 8, um Fahrzeuge auf langen Entfernungen zu transportieren, wobei sparsame potentielle Energien verwendet werden, mit einer Vermessung des Reliefs zwischen dem Ausgangspunkt und dem Ankunftspunkt und einem Bestimmen des Verlaufs des Gleises auf der Grundlage dieser Vermessung, so dass dieses das Gefälle auf den Abwärtsgleisabschnitten sowie eine Mindestanzahl von Aufwärtsgleisabschnitten aufweist.
